# EUROPÄISCHE PATENTANMELDUNG

(11) **EP 4 759 126 A1**
(43) Veröffentlichungstag der Anmeldung: **17.06.2026**
(21) Anmeldenummer: 25211923.5
(22) Anmeldetag: 29.10.2025
(51) Int. Cl.: A01F 15/07

(54) **WICKELEINRICHTUNG ZUM EINWICKELN VON ZYLINDRISCHEN ERNTEGUTBALLEN MIT EINEM WICKELMATERIAL**

(30) Priorität: 11.12.2024 DE 102024137136
(71) Anmelder: Usines CLAAS France S.A.S, 57140 St. Rémy / Woippy (FR)
(72) Erfinder: Fuchs, Volker, 54439 Saarburg (DE); Batancourt, Grégory, 57130 Vionville (FR); Bare, Florent, 55150 Azannes (FR); Mörsch, Daniel, 66706 Perl (DE); Schlege, Christoph, 18057 Rostock (DE); Friel, Holger, 19288 Glaisin (DE)
(74) Vertreter: CLAAS Gruppe

(57) **Zusammenfassung**

Die vorliegende Erfindung betrifft eine Wickeleinrichtung (3), welche einen Tragrahmen (9) umfasst, der mit einem Wickeltisch (11) gekoppelt ist. Der Wickeltisch (11) ist um eine vertikal verlaufende Rotationsachse (V) drehbeweglich antreibbar und dazu vorgesehen und eingerichtet, einen Erntegutballen (E) um eine horizontal verlaufende Rotationsachse (H) des Erntegutballens (E) drehbeweglich anzutreiben. Der Tragrahmen (9) umfasst ein Portal (12), unterhalb dessen der Erntegutballen (E) in einer Wickelposition (P) des Wickeltisches (11) positioniert ist. Die Wickeleinrichtung (3) umfasst auf einander gegenüberliegenden Seiten des Portals (12) jeweils einen an dem Portal (12) rahmenfest angeordneten Wickelmaterialspeicher (13) zur Vorhaltung von Wickelmaterial. Die Wickeleinrichtung (3) ist dazu vorgesehen und eingerichtet, den Erntegutballen (E) in der Wickelposition (P) des Wickeltisches (11) mittels eines drehbeweglichen Antriebs des Wickeltisches (11) um die vertikal verlaufende Rotationsachse (V) und eines drehbeweglichen Antriebs des Erntegutballens (E) um die horizontal verlaufende Rotationsachse (H) mit dem in den Wickelmaterialspeichern (13) vorgehaltenen Wickelmaterial einzuwickeln.

## Beschreibung

Die vorliegende Anmeldung betrifft eine Wickeleinrichtung zum Einwickeln von zylindrischen Erntegutballen mit einem Wickelmaterial gemäß dem Oberbegriff des unabhängigen Patentanspruchs 1 sowie eine landwirtschaftliche Press-Wickelkombination gemäß dem Oberbegriff des unabhängigen Patentanspruchs 15.

In der Landwirtschaft ist es üblich, Gras und/oder Klee durch sogenanntes Silieren für die Fütterung von Tieren haltbar zu machen. Für die Konservierung des Grünfutters ist es erforderlich, dieses zunächst zu verdichten und für die anschließende Milchsäuregärung unter Luftabschluss zu bringen. Ein besonders futterschonendes Verfahren hierzu besteht in der Verdichtung des Erntegutes durch eine Ballenpresse, die nach verschiedenen Verfahren das Erntegut aufsammeln und zu Erntegutballen verschiedener Abmessungen formen kann. Zum Schutz des Erntegutes vor Witterungseinflüssen und um den Fermentierungsprozess zu ermöglichen, ist ein im Wesentlichen luft- und flüssigkeitsdichter Einschluss des Erntegutes erforderlich, welcher durch das Einwickeln bzw. Umhüllen des Erntegutballens mit einem bahnförmigen Wickelmaterial erreicht wird. Hierzu kommen sogenannte Wickeleinrichtungen zum Einsatz.

Wickeleinrichtungen der eingangs genannten Art sind aus der Landwirtschaft bekannt und können Teil einer landwirtschaftlichen Press-Wickelkombination sein, die in der einfachsten Ausführung aus einer Ballenpresse, in der Regel einer landwirtschaftlichen Rundballenpresse, und einer dieser nachgeordneten und mit dieser gekoppelten Wickeleinrichtung besteht. Die Press-Wickelkombination wird an einen landwirtschaftlichen Traktor angehängt und ist zum Aufnehmen von schwadförmig abgelegtem und eventuell angewelkten Erntegut vorgesehen. Die Rundballenpresse umfasst hierfür sogenannte Mittel zum Aufnehmen und Fördern von Erntegut, die das Erntegut im Betrieb der Rundballenpresse vom Boden einer landwirtschaftlichen Fläche aufnehmen und in eine Presskammer der Rundballenpresse fördern, in der das Erntegut zu einem zylindrischen Erntegutballen geformt wird. Ein Pressengehäuse einer solchen Rundballenpresse umfasst in der Regel ein feststehendes Pressengehäuseteil und eine relativ zu dem feststehenden Pressengehäuseteil schwenkbare Auswurfklappe. Die Presskammer der Rundballenpresse ist in dem Pressengehäuse ausgebildet, wobei die Rundballenpresse ein Pressmittel umfasst, welches die Presskammer umfangsseitig begrenzt. Das Pressmittel kann als Pressriemen ausgebildet sein oder aus einer Vielzahl von voneinander beabstandeten Pressrollen gebildet werden. Mittels des Pressmittels wird das über die Mittel zum Aufnehmen und Fördern in die Presskammer gefördertes Erntegut zum Erntegutballen geformt. Nach Erreichen einer vorbestimmten Größe des Erntegutballens wird der Erntegutballen in der Presskammer zunächst mit einem Bindemittel, beispielsweise einem Netz, umhüllt. Anschließend wird zum Auswerfen des Erntegutballens die Auswurfklappe von einer Schließstellung in eine Öffnungsstellung verschwenkt und der Erntegutballen an eine der Rundballenpresse nachgeordnete Wickeleinrichtung übergeben. Der Erntegutballen wird nach dem Einwickeln bzw. Umhüllen durch die Wickeleinrichtung auf der landwirtschaftlichen Fläche abgelegt.

Die EP 2 033 894 A1 und die EP 2 149 293 A1 beschreiben beispielsweise jeweils eine solche Wickeleinrichtung für eine landwirtschaftliche Press-Wickelkombination zum Pressen und Einwickeln von zylindrischen Erntegutballen. Nach dem Pressen wird der Erntegutballen auf einem Wickeltisch der Wickeleinrichtung derart platziert, dass der Erntegutballen im Wesentlichen in der senkrechten Rotationsachse der zweiarmigen Wickeleinrichtung angeordnet ist. An den beiden Wickelarmen ist jeweils eine Rolle mit einem bahnförmigen Wickelmaterial angeordnet, welches durch eine Rotation der Wickelarme in einer Ebene um den Erntegutballen herumgeführt wird. Um ein vollständiges Einwickeln bzw. Umhüllen des Erntegutballens zu erreichen, wird der Erntegutballen um seine horizontal verlaufende Rotationsachse rotierend von dem Wickeltisch angetrieben.

Die Drehgeschwindigkeit, mit der sich die Wickelarme um den Erntegutballen drehen, bestimmt die Prozessdauer des vollständigen Einwickelns bzw. Umhüllens bis zur Ablage des Erntegutballens auf der landwirtschaftlichen Fläche. Die Drehgeschwindigkeit der Wickelarme wird maßgeblich von den Materialeigenschaften des Wickelmaterials bestimmt und begrenzt. Zudem erfordern höhere Drehgeschwindigkeiten der Wickelarme leistungsstärkere Antriebe und verstärkte Halterungen für die Rollen mit Wickelmaterial, um die auftretenden dynamischen Kräfte aufnehmen zu können. Ferner wird durch die Rotation der Wickelarme um den Erntegutballen herum Luft zwischen die auf dem Erntegutballen aufgebrachten Bahnen an Wickelmaterial eingebracht. Ein hoher Lufteintrag ist allerdings im Hinblick auf die Konservierung des Grünfutters im eingewickelten Erntegutballen als nachteilig anzusehen, da für die im Erntegutballen im Zuge des Silierprozesses ablaufende Milchsäuregärung kein Lufteintrag wünschenswert ist. Im Übrigen birgt der Lufteintrag auch hinsichtlich des Wickelprozesses und der Stabilität des eingewickelten Erntegutballens gewisse Risiken. Zudem benötigen Press-Wickelkombination aufgrund der Anordnung der Wickeleinrichtung hinter der Presskammer der Rundballenpresse und des Platzbedarfs der Wickeleinrichtung beim Einwickeln bedingt durch die um den Erntegutballen drehbeweglichen Wickelarme einen großen Bauraum. Dies kann im Straßenverkehr oder beim Manövrieren mit der Presse hinderlich sein und ein erhebliches Sicherheitsrisiko mit sich bringen.

Ausgehend von dem vorstehend genannten Stand der Technik ist es demnach die Aufgabe der vorliegenden Erfindung eine Wickeleinrichtung zum Einwickeln von zylindrischen Erntegutballen mit einem Wickelmaterial anzugeben, welche einen effizienteren Wickelprozess erlaubt und eine damit einhergehende erhöhte Wickelprozesssicherheit gewährleistet, gleichzeitig eine hohe Qualität des gewickelten Erntegutballens und eine gesteigerte Sicherheit bei der Handhabung im Betrieb und Transport sicherstellt.

Diese Aufgabe wird erfindungsgemäß durch die hier offenbarten Ausführungsformen gelöst, die insbesondere durch den Gegenstand des unabhängigen Patentanspruchs 1 definiert sind. Die abhängigen Ansprüche 2 bis 14 betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Demnach betrifft die vorliegende Erfindung eine Wickeleinrichtung zum Einwickeln von zylindrischen Erntegutballen mit einem Wickelmaterial, insbesondere für eine landwirtschaftliche Press-Wickelkombination. Die Wickeleinrichtung umfasst einen Tragrahmen, der mit einem Wickeltisch zur Aufnahme des Erntegutballens und zur Ablage des Erntegutballens auf einem Untergrund gekoppelt ist. Der Wickeltisch ist um eine vertikal verlaufende Rotationsachse drehbeweglich antreibbar und dazu vorgesehen und eingerichtet, den Erntegutballen um eine horizontal verlaufende Rotationsachse des Erntegutballens drehbeweglich anzutreiben. Die Wickeleinrichtung ist dadurch gekennzeichnet, dass der Tragrahmen ein Portal umfasst, wobei der Erntegutballen in einer Wickelposition des Wickeltisches unterhalb des Portals positioniert ist, wobei die Wickeleinrichtung auf einander gegenüberliegenden Seiten des Portals jeweils einen an dem Portal rahmenfest angeordneten Wickelmaterialspeicher zur Vorhaltung des Wickelmaterials umfasst, wobei die Wickeleinrichtung dazu vorgesehen und eingerichtet ist, den Erntegutballen in der Wickelposition des Wickeltisches mittels eines drehbeweglichen Antriebs des Wickeltisches um die vertikal verlaufende Rotationsachse und eines drehbeweglichen Antriebs des Erntegutballens um die horizontal verlaufende Rotationsachse mit dem in den Wickelmaterialspeichern vorgehaltenen Wickelmaterial einzuwickeln.

Im Gegensatz zum eingangs genannten Stand der Technik, bei welchem der auf dem Wickeltisch befindliche Erntegutballen durch eine Rotation von das Wickelmaterial tragenden Wickelarmen um den Erntegutballen herum mit Wickelmaterial eingewickelt wird, zeichnet sich die erfindungsgemäße Wickeleinrichtung dadurch aus, dass der Erntegutballen während des Wickelvorgangs sowohl um die vertikal verlaufende Rotationsachse des Wickeltisches als auch um die eigene horizontal verlaufende Rotationsachse gedreht wird, also um zwei orthogonal zueinander verlaufende Achsen, mittels des Wickeltisches rotiert wird, und die Wickelmaterial vorhaltenden Wickelmaterialspeicher rahmenfest angeordnet sind, sich also nicht relativ zum Erntegutballen bewegen. Diese erfindungsgemäße Ausgestaltung hat eine Vielzahl von Vorteilen. Zum einen kann durch die erfindungsgemäße Ausgestaltung die Prozessdauer des Wickelvorgangs einschließlich der Ballenablage insgesamt verbessert werden. Zudem kann der Einfluss der Materialeigenschaften des Wickelmaterials auf die Drehgeschwindigkeit reduziert werden, sodass es auch bei hohen Drehgeschwindigkeiten des Erntegutballens nur selten zu einem Materialversagen des Wickelmaterials kommt. Ferner kann auf leistungsstärkere Antriebe und verstärkte Halterungen für die Rollen mit Wickelmaterial verzichtet werden, da bei den Wickelmaterial vorhaltenden Komponenten aufgrund der ausbleibenden Rotation keine dynamischen Kräfte wirken. Ferner wird durch die Kombination aus Rotation des Erntegutballens und rahmenfestem Wickelmaterialspeichern der Eintrag von Luft zwischen die auf dem Erntegutballen aufgebrachten Bahnen an Wickelmaterial reduziert, vorzugsweise gänzlich unterbunden, was einen positiven Einfluss auf die nach Einwickeln im Erntegutballen im Zuge des Silierprozesses ablaufende Milchsäuregärung und Prozessstabilität des Wickelvorgangs hat. Die erfindungsgemäße Wickeleinrichtung zeichnet sich weiter durch einen geringeren Bauraumbedarf sowohl im Betrieb auf der landwirtschaftlichen Fläche als auch während eines Transports aus, was sich positiv auf die Betriebssicherheit auswirkt, insbesondere dann, wenn die Wickeleinrichtung mit einer Rundballenpresse zur Press-Wickelkombination kombiniert wird.

Gemäß einer vorteilhaften Weiterbildung der Erfindung ist vorgesehen, dass die Wickeleinrichtung dazu vorgesehen und eingerichtet ist, den Erntegutballen in der Wickelposition des Wickeltisches mittels eines gleichzeitigen drehbeweglichen Antriebs des Wickeltisches um die vertikal verlaufende Rotationsachse und eines drehbeweglichen Antriebs des Erntegutballens um die horizontal verlaufende Rotationsachse mit dem in den Wickelmaterialspeichern vorgehaltenen Wickelmaterial einzuwickeln.

Das gleichzeitige Rotieren des Erntegutballens um die beiden Rotationsachse durch einen Antrieb des Wickeltisches während des Wickelvorgangs erlaubt eine effiziente und homogene Applikation des Wickelmaterials auf dem Erntegutballen. Zudem kann ein schnelleres Einwickeln des Erntegutballs erfolgen. Insgesamt lässt sich somit die Betriebswirtschaftlichkeit des Wickelprozesses erhöhen.

Gemäß einer vorteilhaften Weiterbildung der Erfindung ist vorgesehen, dass der Wickeltisch zwischen zumindest einer ersten Endposition, der Wickelposition und einer zweiten Endposition reversibel verfahrbar mit den Tragrahmen gekoppelt ist, wobei sich die Wickelposition zwischen der ersten Endposition und der zweiten Endposition befindet, wobei die erste Endposition zumindest zur Aufnahme des Erntegutballens und die zweite Endposition zumindest zur Ablage des Erntegutballens auf dem Untergrund vorgesehen ist.

Gemäß einer vorteilhaften Weiterbildung der Erfindung ist vorgesehen, dass der Wickeltisch in eine Transportposition verfahrbar ist, wobei sich die Transportposition zwischen der ersten Endposition und Wickelposition befindet.

Die Verfahrbarkeit des Wickeltisches zwischen den verschiedenen Positionen erlaubt neben der Nutzung der Wickeleinrichtung zum Einwickeln des Erntegutballens die Umsetzung weiterer Funktionen und schafft somit ein breiteres Anwendungsspektrum der Wickeleinrichtung. So kann durch ein Verfahren des Wickeltisches neben dem Einwickeln des Erntegutballens mit Wickelmaterial ferner und unabhängig von einer Einwicklung die Ablage des Erntegutballens auf dem Untergrund in Abhängigkeit der vorherrschenden Gegebenheiten individuell gestaltet werden. Auch der Transport kann durch ein Verfahren des Wickeltisches und eine damit einhergehende Verkürzung der Wickeleinrichtung begünstigt werden. Zudem erlaubt die Wickeleinrichtung durch die Verfahrbarkeit des Wickeltisches zwischen den Positionen die Gruppierung von zwei Erntegutballen auf dem Untergrund, was einen Abtransport der Erntegutballen wirtschaftlicher gestalten kann.

Gemäß einer vorteilhaften Weiterbildung der Erfindung ist vorgesehen, dass die Wickeleinrichtung einen Wagen umfasst, an dem der Wickeltisch angeordnet ist, wobei der Wagen an dem Tragrahmen linear beweglich gelagert und zum reversiblen Verfahren des Wickeltisches zwischen den Positionen antreibbar ist.

Die Zwischenschaltung eines Wagens zur Kopplung von Tragrahmen und Wickeltisch erlaubt eine vorteilhafte Kraftleitung des durch den Erntegutballen wirkenden Gewichtskraft auf den Wickeltisch in den Tragrahmen der Wickeleinrichtung als lasttragende Struktur, wobei die Verfahrbarkeit des Wickeltisches zwischen den verschiedenen Position störungsfrei und mit stets hoher Präzision über die Lebensdauer hinweg sichergestellt werden kann. Zudem wird durch den zwischengeschalteten Wagen neben der vorteilhaften Kraftleitung auch die Lagerung des Wickeltisches zwecks Drehung desselben um die vertikal verlaufende Rotationsachse vereinfacht.

Gemäß einer vorteilhaften Weiterbildung der Erfindung ist vorgesehen, dass der Wickeltisch zur Aufnahme des Erntegutballens und zur Ablage des Erntegutballens auf dem Untergrund um eine horizontal verlaufende Schwenkachse schwenkbeweglich antreibbar ist.

Gemäß einer vorteilhaften Weiterbildung der Erfindung ist vorgesehen, dass der Wickeltisch dazu vorgesehen und eingerichtet ist, eine Ausrichtung zur Ablage des Erntegutballens auf der Umfangsfläche des Erntegutballens oder eine Ausrichtung zur Ablage des Erntegutballens auf einer Stirnseite des Erntegutballens einzunehmen, wobei die Wickeleinrichtung dazu vorgesehen und eingerichtet ist, den Wickeltisch mittels eines drehbeweglichen Antriebs des Wickeltisches um die vertikal verlaufende Rotationsachse in der entsprechenden Ausrichtung zu positionieren.

Die Schaffung einer Verschwenkbarkeit des Wickeltisches um die horizontal verlaufende Schwenkachse schafft eine einfache Möglichkeit den Erntegutballen auf den Untergrund abzulegen. In Kombination mit der Drehbeweglichkeit des Wickeltisches um die vertikal verlaufende Rotationsachse kann die Ablage des Erntegutballens ferner abhängig vom Höhenprofil des Untergrunds flexibel gestaltet werden. Wird beispielsweise auf einer landwirtschaftlichen Fläche mit Hangneigung gearbeitet, kann der Erntegutballen mittels Drehung des Wickeltisches um die vertikal verlaufende Rotationsachse und einem Verschwenken des Wickeltisches um die horizontal verlaufende Schwenkachse auf einer seiner Stirnflächen abgelegt werden. Einer Neigung von zylindrischen Erntegutballen zur Bewegung nach erfolgter Ablage auf dem Untergrund aufgrund der Hangneigung kann somit besonders einfach entgegengewirkt werden. Auf einen sonst üblichen Ballenaufsteller zur Ablage des Erntegutballens auf einer Stirnseite, welcher mit der Wickeleinrichtung gekoppelt wird, kann somit verzichtet werden, was sich vorteilhaft auf den Bauraumbedarf und die Betriebswirtschaftlichkeit auswirkt. Zudem kann auch der Prozess der Aufnahme eines Erntegutballens auf den Wickeltisch vorteilhaft beeinflusst werden, indem der Wickeltisch leicht in Richtung des Erntegutballens, beispielsweise bei einer Verwendung der Wickeleinrichtung in einer Press-Wickelkombination in Richtung der Rundballenpresse bzw. der Presskammer der Rundballenpresse, geneigt wird.

Gemäß einer vorteilhaften Weiterbildung der Erfindung ist vorgesehen, dass die Wickeleinrichtung dazu vorgesehen und eingerichtet ist, den Erntegutballen in der ersten Endposition auf dem Untergrund abzulegen.

Die Möglichkeit den Erntegutballen auch in der ersten Endposition auf dem Untergrund abzulegen, ist insbesondere für die Nutzung in Kombination mit einer Rundballenpresse als Press-Wickelkombination von Vorteil anzusehen und erlaubt die bedarfsweise Nutzung der Press-Wickelkombination im Funktionsumfang lediglich einer Rundballenpresse. Der Erntegutballen kann nach Verlassen der Presskammer unmittelbar von der Wickeleinrichtung abgelegt werden, sodass der Erntegutballen lediglich von der Rundballenpresse mittels eines Netzes oder aber eines Filmmaterials umhüllt, also ohne ein Einwickeln mit Wickelmaterial der Wickeleinrichtung, auf dem Untergrund abgelegt ist.

Gemäß einer vorteilhaften Weiterbildung der Erfindung ist vorgesehen, dass jeder Wickelmaterialspeicher zumindest einen Revolver mit jeweils mehreren, vorzugsweise jeweils drei, Wickelmaterialrollen umfasst, wobei die Wickeleinrichtung dazu vorgesehen und eingerichtet ist, Wickelmaterial nur mittels einer der mehreren im jeweiligen Revolver vorgehaltenen Wickelmaterialrollen auf dem Erntegutballen zu applizieren.

Gemäß einer vorteilhaften Weiterbildung der Erfindung ist vorgesehen, dass der jeweilige Revolver um eine vertikal verlaufende Rotationsachse drehbeweglich und entlang der vertikal verlaufenden Rotationsachse höhenverstellbar im jeweiligen Wickelmaterialspeicher gelagert ist.

Vorzugsweise ist vorgesehen, dass der jeweilige Revolver jeweils antreibbar um die vertikal verlaufende Rotationsachse drehbeweglich und entlang der vertikal verlaufenden Rotationsachse höhenverstellbar im jeweiligen Wickelmaterialspeicher gelagert ist.

Die Vorhaltung von Wickelmaterial im Wickelmaterialspeicher mittels eines mehrere Wickelmaterialrollen tragenden Revolvers sorgt für eine erhebliche Zeitersparnis bei einem Wechsel der für die Applikation von Wickelmaterial auf dem Erntegutballen vorgesehenen Wickelmaterialrolle, wenn das Wickelmaterial auf dieser Wickelmaterialrolle verbraucht ist. Eine weitere zur Bevorratung dienende Wickelmaterialrolle im Revolver kann in die Applikationsposition verbracht werden, beispielsweise durch ein schlichtes Drehen des Revolvers um die vertikal verlaufende Rotationsachse. Die nächste Wickelmaterialrolle ist somit schnell und unkompliziert in die für den Einsatz erforderliche Applikationsposition zu verbringen, wodurch die Stillstandzeit der Wickeleinrichtung reduziert werden kann. Die Höhenverstellbarkeit der Revolver erlaubt ferner eine in Abhängigkeit der Größe des einzuwickelnden Erntegutballens optimale, also homogene und effiziente, Abdeckung durch die Wickelmaterialbahnen zu schaffen. Hierdurch kann ein prozesssichereres Einwickeln realisiert und Wickelmaterial eingespart werden.

Gemäß einer vorteilhaften Weiterbildung der Erfindung ist vorgesehen, dass jeder Wickelmaterialspeicher eine einstellbare Bremsvorrichtung zur Einstellung der Spannung des Wickelmaterials während einer Applikation des Wickelmaterials auf dem Erntegutballen umfasst.

Vorzugsweise ist vorgesehen, dass jeder Wickelmaterialspeicher eine motorisch einstellbare Bremsvorrichtung zur Einstellung der Spannung des Wickelmaterials während einer Applikation des Wickelmaterials auf dem Erntegutballen umfasst.

Insbesondere ist vorgesehen, dass die einstellbare bzw. motorisch einstellbare Bremsvorrichtung eine Spannrolle ist.

Die am jeweiligen Wickelmaterialspeicher vorgesehene Bremseinrichtung erlaubt eine hinsichtlich der Randbedingungen und Zielgrößen für den Wickelprozess selbst und/oder den sich anschließenden Silierprozess im Erntegutballen einfache, optimale und sehr präzise Einstellung der Wickelmaterialspannung. Zudem wird das Wickelmaterial schonend gespannt, sodass etwaige vorhandene Materialschwächungen, beispielsweise durch Risse oder Beschädigungen, trotz des Spannvorgangs nicht zwangsläufig zu einem Materialversagen des Wickelmaterials während der Applikation auf dem Erntegutballen führen.

Gemäß einer vorteilhaften Weiterbildung der Erfindung ist vorgesehen, dass jeder Wickelmaterialspeicher zwei Revolver umfasst.

Durch die Integration von jeweils zwei Revolvern pro Wickelmaterialspeicher kann der Durchsatz erhöht werden, da ein Wickelvorgang schneller abgeschlossen werden kann. Ferner kann bei einem Materialversagen einer während des Wickelvorgangs applizierten Wickelmaterialbahn der Wickelvorgang trotz alledem noch prozesssicher mit einem qualitativ hochwertigen Ergebnis beendet werden, ohne die für den Wickelvorgang benötigte Zeit wesentlich zu steigern.

Gemäß einer vorteilhaften Weiterbildung der Erfindung ist vorgesehen, dass der Tragrahmen U-förmig, ein Tragrahmenbasiselement und zwei sich von dem Tragrahmenbasiselement aus erstreckende Tragrahmenschenkel umfassend, ausgebildet ist, wobei das Portal mit den beiden Tragrahmenschenkeln verbunden ist.

Die Ausgestaltung des Tragrahmens als U-Profil, also als einseitig offene Struktur, begünstigt den Wickelprozess und eine Ablage des Erntegutballens, da keine störenden Elemente im für den Wickel- und Ablageprozess benötigten Funktionsraum angeordnet sind.

Gemäß einer vorteilhaften Weiterbildung der Erfindung ist vorgesehen, dass der Tragrahmen mit zumindest zwei Bodeneingriffsmitteln zur Abstützung der Wickeleinrichtung gegenüber dem Untergrund gekoppelt ist.

Vorzugsweise ist vorgesehen, dass jeder Tragrahmenschenkel mit zumindest einem Bodeneingriffsmittel gekoppelt ist.

Die erfindungsgemäße Aufgabe wird ferner durch eine landwirtschaftliche Press-Wickelkombination gelöst, welche eine landwirtschaftliche Rundballenpresse und eine solche Wickeleinrichtung zum Einwickeln von zylindrischen Erntegutballen mit Wickelmaterial umfasst.

Die vorliegende Erfindung wird nachstehend anhand der in den Figuren abgebildeten Ausführungsformen näher beschrieben.

Es zeigen:
- FIG. 1:: eine schematische und exemplarische Ansicht einer erfindungsgemäßen Press-Wickelkombination umfassend eine landwirtschaftliche Rundballenpresse und eine erfindungsgemäße Wickeleinrichtung zum Einwickeln von zylindrischen Erntegutballen mit einem Wickelmaterial;
- FIG. 2:: eine schematische und exemplarische Ansicht der erfindungsgemäßen Wickeleinrichtung gemäß FIG. 1; und
- FIG. 3:: eine schematische und exemplarische Schnittansicht durch die erfindungsgemäße Wickeleinrichtung in einem mit einer landwirtschaftlichen Rundballenpresse zur Press-Wickelkombination gekoppelten Zustand gemäß FIG. 1, wobei ein Wickeltisch der Wickeleinrichtung schematisch und exemplarisch vereinfacht in verschiedenen Positionen dargestellt ist.

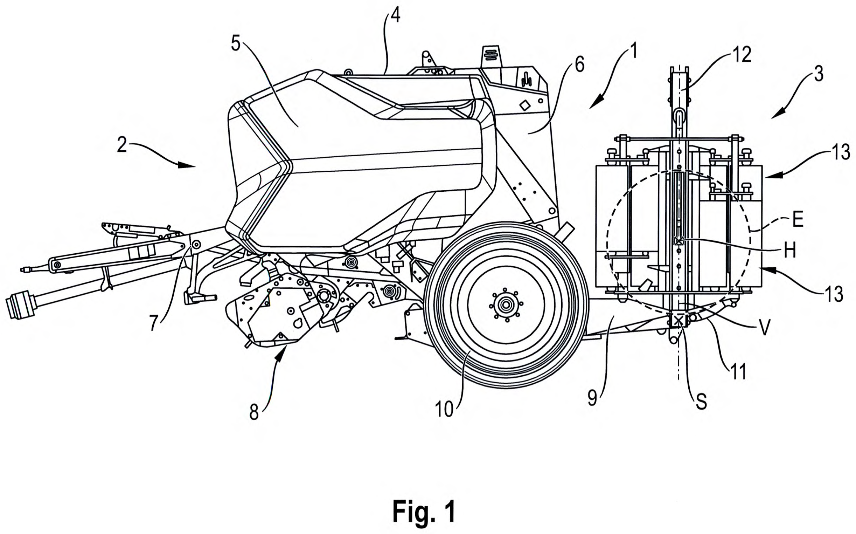

FIG. 1 zeigt eine schematische und exemplarische Darstellung einer erfindungsgemäßen landwirtschaftlichen Press-Wickelkombination 1. Die Press-Wickelkombination 1 umfasst eine landwirtschaftliche Rundballenpressen 2 und eine Wickeleinrichtung 3 zum Einwickeln von zylindrischen Erntegutballen E mit einem Wickelmaterial. Eine Rundballenpresse 2 umfasst typischerweise ein Pressengehäuse 4, welches ein feststehendes Gehäuseteil 5 und eine relativ zu dem feststehenden Gehäuseteil 5 schwenkbare Auswurfklappe 6 umfasst. Die Auswurfklappe 6 ist zwischen einer Schließstellung und einer Öffnungsstellung relativ zum feststehenden Gehäuseteil 5 reversibel schwenkbar, wobei eine Bewegung der Auswurfklappe 6 zwischen der Schließstellung und der Öffnungsstellung zum Öffnen oder Schließen einer in dem Pressengehäuse 3 ausgebildeten - in den FIGs. nicht dargestellten - Presskammer führt. Das Pressengehäuse 4, insbesondere das feststehende Gehäuseteil 5, ist auf einem Fahrgestell 7 angeordnet und mit diesem verbunden, über das die Rundballenpresse 2 wiederum mit einer - in den FIGs. nicht dargestellten - landwirtschaftlichen Arbeitsmaschine, insbesondere einem Traktor, gekoppelt werden kann, so dass die landwirtschaftliche Arbeitsmaschine die Rundballenpresse 2 im Betrieb auf einer landwirtschaftlichen Fläche bewegt.

Die in dem Pressengehäuse 4 ausgebildete Presskammer wird von einem - in den FIGs. nicht dargestellten - Pressmittel umfangsseitig begrenzt. Das Pressmittel kann als Pressriemen ausgebildet sein oder aber von einer Vielzahl von voneinander beabstandet angeordneten Pressrollen gebildet werden. Während des Betriebs der Rundballenpressen 2 wird mithilfe von sogenannten Mitteln 8 zum Aufnehmen und Fördern von Erntegut Erntegut von der landwirtschaftlichen Fläche aufgenommen und in die Presskammer gefördert, wobei mittels des Pressmittels aus dem in die Presskammer geförderten Erntegut ein zylindrischer Erntegutballen E, auch Rundballen bezeichnet, geformt bzw. gebildet wird. Die Mittel 8 zum Aufnehmen und Fördern von Erntegut umfassen zumindest eine sogenannte Pick-Up, mit deren Hilfe das Erntegut von der landwirtschaftlichen Fläche aufgenommen wird, und einen Rotor, mit dessen Hilfe das aufgenommene Erntegut der Presskammer zugeführt wird.

Die Rundballenpresse 2 umfasst weiterhin eine - in den FIGs. nicht dargestellte - Einrichtung zum Ummanteln des in der Presskammer gebildeten Erntegutballens E mit einem Hüllmaterial. Diese Einrichtung zum Ummanteln ist innerhalb des Pressengehäuses 4 angeordnet und dazu eingerichtet, den Erntegutballen E nach Abschluss des Pressvorgangs und vor einem Auswerfen des Erntegutballens E aus der Presskammer, welches durch ein Verlagern der Auswurfklappe 6 aus der Schließstellung in die Öffnungsstellung erfolgt, noch in der Presskammer entweder mit einem Netz oder mit einem Film bzw. einer Folie als Hüllmaterial zu ummanteln.

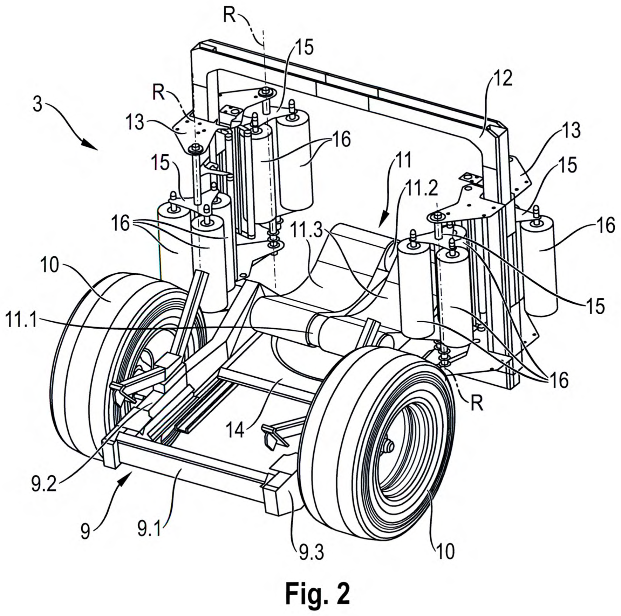

Die erfindungsgemäße Wickeleinrichtung 3, welche wie eingangs geschildert mit einer Rundballenpresse 2 zur Press-Wickelkombination 1 kombiniert werden kann, umfasst einen Tragrahmen 9, welcher als lasttragende Struktur für verschiedene nachfolgend noch beschriebenen Vorrichtungen bzw. Komponenten der Wickeleinrichtung 3 fungiert. Bei einer Kombination der Wickeleinrichtung 3 mit einer Rundballenpresse 2 zur Press-Wickelkombination 1 dient der Tragrahmen 9 der Wickeleinrichtung 3 ferner, wie insbesondere in FIG. 1 dargestellt, der Aufnahme bzw. Lagerung der Rundballenpresse 2. In einer bevorzugten Ausgestaltung, welche insbesondere der FIG. 2 im Detail zu entnehmen ist, ist der Tragrahmen 9 der Wickeleinrichtung 3 U-förmig ausgebildet. Bei dieser Ausgestaltung umfasst der Tragrahmen 9 ein Tragrahmenbasiselement 9.1 und zwei sich von dem Tragrahmenbasiselement 9.1 aus erstreckende Tragrahmenschenkel 9.2, 9.3. Der Tragrahmen 9 der Wickeleinrichtung 3 ist somit bei einer derartigen U-förmigen Ausgestaltung einseitig offen. Bei einer Kopplung der Wickeleinrichtung 3 mit der Rundballenpresse 2 zwecks Bildung der erfindungsgemäßen Press-Wickelkombination 1 ist der Tragrahmen 9 derart angeordnet, dass das Tragrahmenbasiselement 9.1 in unmittelbarer Nähe des heckseitigen Endes der Rundballenpresse 2 positioniert ist, die Rundballenpresse 2 insbesondere über das Tragrahmenbasiselement 9.1 mit der Wickeleinrichtung 3 gekoppelt wird, das offene Ende des Tragrahmens 9 somit vom heckseitigen Ende der Rundballenpresse 2 beabstandet ist. Der Tragrahmen 9 ist mit zwei Bodeneingriffsmitteln 10 zur Abstützung der Wickeleinrichtung 3 gegenüber einem Untergrund, beispielsweise der landwirtschaftlichen Fläche, gekoppelt. Jeder der Tragrahmenschenkel 9.2, 9.3 des U-förmig ausgebildeten Tragrahmens 9 ist dabei mit einem der beiden Bodeneingriffsmittel 10 gekoppelt. Der Tragrahmen 10 kann auch mit mehr als zwei Bodeneingriffsmitteln 10 zur Abstützung der Wickeleinrichtung 3 gegenüber dem Untergrund, beispielsweise mit vier Bodeneingriffsmitteln 10 in Form einer sogenannten Tandembereifung, gekoppelt sein. Die Bodeneingriffsmittel 10 sind bevorzugt als Räder ausgebildet. Grundsätzlich könnten die Bodeneingriffsmittel 10 allerdings auch als Raupenlaufwerk oder bei einer Tandembereifung als Kombination aus Rädern und Raupenlaufwerken ausgebildet sein.

Die Wickeleinrichtung 3 umfasst neben dem Tragrahmen 9 einen Wickeltisch 11 zur Aufnahme eines Erntegutballens E und zur Ablage des Erntegutballens E auf dem Untergrund. Der Wickeltisch 11 ist mit dem Tragrahmen 9, insbesondere den Tragrahmenschenkeln 9.2, 9.3, gekoppelt. Die Kopplung des Wickeltisch 11 mit dem Tragrahmen 9 kann dabei grundsätzlich unmittelbar, also über eine direkte Lagerung des Wickeltisch 11 am Tragrahmen 9, oder aber mittelbar, also über die Zwischenschaltung einer Vorrichtung, die am Tragrahmen 9 angeordnet bzw. gelagert ist und den Wickeltisch 11 trägt bzw. aufnimmt, erfolgen. Der Wickeltisch 11 ist um eine vertikal verlaufende Rotationsachse V drehbeweglich antreibbar. Hierzu umfasst die Wickeleinrichtung 3 eine - in den FIGs. nicht dargestellte - Antriebseinrichtung. Neben der Drehbeweglichkeit um die vertikal verlaufende Rotationsachse V ist der Wickeltisch 11 ferner dazu vorgesehen und eingerichtet, einen von dem Wickeltisch 11 aufgenommenen Erntegutballen E um eine horizontal verlaufende Rotationsachse H des Erntegutballens E drehbeweglich anzutreiben. Auch für diesen Antrieb umfasst die Wickeleinrichtung 3 eine - in den FIGs. nicht dargestellte - Antriebseinrichtung. Zum Antrieb des Erntegutballens E um die horizontal verlaufende Rotationsachse H umfasst der Wickeltisch 11 beispielsweise, wie in den FIGs. dargestellt, zumindest zwei drehbar gelagerte Walzen 11.1, 11.2 sowie mehrere, um die Walzen 11.1, 11.2 herumgeschlungene, den Erntegutballen E unterstützenden Bänder 11.3. Indem zumindest eine der Walzen 11.1, 11.2 drehangetrieben wird, kann der Erntegutballen E um die horizontal verlaufende Rotationsachse H in Drehung versetzt werden. Im Betrieb der Wickeleinrichtung 3 kann somit ein auf dem Wickeltisch 11 aufgenommener Erntegutballen E mittels eines drehbeweglichen Antriebs des Wickeltisches 11 sowohl die vertikal verlaufende Rotationsachse V als auch um die horizontal verlaufende Rotationsachse H drehbewegt werden.

Der Tragrahmen 9 umfasst ein Portal 12, welches neben dem Wickeltisch 11 ein wesentliches Element der Wickeleinrichtung 3 darstellt. Der im Betrieb der Wickeleinrichtung 3 von dem Wickeltisch 11 aufgenommene Erntegutballen E befindet sich in einer Wickelposition P des Wickeltisches 11, also einer Position, in welcher der Erntegutballen E auf dem Wickeltisch 11 mittels Wickelmaterial der Wickeleinrichtung 3 eingewickelt werden kann, unterhalb dieses Portals 12 bzw. ist unterhalb des Portals 12 positioniert. Die Wickeleinrichtung 3 umfasst auf einander gegenüberliegenden Seiten des Portals 12 jeweils einen an dem Portal 12 rahmenfest angeordneten Wickelmaterialspeicher 13. Der Wickelmaterialspeicher 13 dient der Vorhaltung des Wickelmaterials zum Einwickeln des auf dem Wickeltisch 11 befindlichen Erntegutballens E mittels der Wickeleinrichtung 3 im Betrieb der Wickeleinrichtung 3. Zum Einwickeln des Erntegutballens E im Betrieb der Wickeleinrichtung 3 ist die Wickeleinrichtung 3 dazu vorgesehen und eingerichtet, den Erntegutballen E, welcher von dem Wickeltisch 11 aufgenommen ist, in der Wickelposition P des Wickeltisches 11 mittels eines drehbeweglichen Antriebs des Wickeltisches 11 um die vertikal verlaufende Rotationsachse V und eines drehbeweglichen Antriebs des Erntegutballens E um die horizontal verlaufende Rotationsachse H mit dem in den Wickelmaterialspeichern 13 vorgehaltenen Wickelmaterial einzuwickeln. Mit anderen Worten, der auf dem Wickeltisch 11 befindliche Erntegutballen E ist in der Wickelposition P des Wickeltisches 11 unterhalb des Portals 12 positioniert, wobei das Portal 12 auf jeder Seite einen Wickelmaterialspeicher 13 umfasst, in welchem das Wickelmaterial zum Einwickeln des Erntegutballens E vorgehalten ist. Durch Antrieb wird der auf dem Wickeltisch 11 befindliche Erntegutballen E sodann um die zwei orthogonal zueinander verlaufenden Achsen V, H rotiert und mit in den Wickelmaterialspeichern 13 vorgehaltenen Wickelmaterial eingewickelt. Die Wickeleinrichtung 3 ist dazu vorgesehen und eingerichtet, in einer bevorzugten Ausgestaltung, den Erntegutballen E in der Wickelposition P des Wickeltisches 11 mittels eines gleichzeitigen drehbeweglichen Antriebs des Wickeltisches 11 um die vertikal verlaufende Rotationsachse V und eines drehbeweglichen Antriebs des Erntegutballens E um die horizontal verlaufende Rotationsachse H mit dem in den Wickelmaterialspeichern 13 vorgehaltenen Wickelmaterial einzuwickeln. Grundsätzlich wäre es auch möglich, dass der drehbewegliche Antrieb des Wickeltisches 11 um die vertikal verlaufende Rotationsachse V und der drehbewegliche Antrieb des Erntegutballens E um die horizontal verlaufende Rotationsachse H zwecks eines Einwickelns des Erntegutballens E schrittweise aufeinanderfolgend mittels der Wickeleinrichtung 3 durchgeführt wird. Das Portal 12 erstreckt sich bei der U-förmigen Ausgestaltung des Tragrahmens 9 zwischen den beiden Tragrahmenschenkeln 9.2, 9.3 des Tragrahmens 9 und ist mit diesen verbunden, wie insbesondere in FIG. 2 zu erkennen.

In der in den FIGs. dargestellten Ausführungsform der Wickeleinrichtung 3 umfasst jeder Wickelmaterialspeicher 13 zwei Revolver 15. Jeder der beiden Revolver 15 eines Wickelmaterialspeichers 13 umfasst mehrere Wickelmaterialrollen 16, in der dargestellten Ausführungsform umfasst jeder Revolver 15 jeweils drei Wickelmaterialrollen 16. Die Wickeleinrichtung 3 ist dazu vorgesehen und eingerichtet, im Betrieb Wickelmaterial nur mittels jeweils einer der mehreren, hier drei, im jeweiligen Revolver 15 vorgehaltenen Wickelmaterialrollen 16 auf dem Erntegutballen E zu applizieren. Die anderen im jeweiligen Revolver 15 vorgehaltenen Wickelmaterialrollen 16 dienen der Bevorratung mit Wickelmaterial. Um das von der Wickelmaterialrolle 16, welche zur Applikation von Wickelmaterial auf dem Erntegutballens E vorgesehen ist, zu dem auf dem Wickeltisch 11 befindlichen Erntegutballens E zu bringen, ist eine - in den FIGs. nicht dargestellte -Wickelmaterialzuführvorrichtung an der Wickeleinrichtung 3 vorgesehen. Damit eine der im Revolver 15 vorgehaltenen und der Bevorratung dienenden Wickelmaterialrollen 16, nachdem eine zur Applikation von Wickelmaterial auf dem Erntegutballen E verwendete Wickelmaterialrolle 16 aufgebraucht ist, in die Applikationsposition verlagert werden kann, ist der jeweilige Revolver 15 um eine vertikal verlaufende Rotationsachse R drehbeweglich. Durch ein Drehen des Revolvers 15 kann somit eine der weiteren der Bevorratung dienenden Wickelmaterialrollen 16 in die Applikationsposition verlagert werden, sodass Wickelmaterial von dieser Wickelmaterialrolle 16 zur Applikation auf dem Erntegutballen E verwendet werden kann. Neben der Drehbeweglichkeit ist der Revolver 15 entlang der vertikal verlaufende Rotationsachse R höhenverstellbar in jeweiligen Wickelmaterialspeicher 13 gelagert. Die Drehbewegung und/oder die Höhenverstellung des Revolvers 15 im jeweiligen Wickelmaterialspeicher 15 kann dabei wahlweise manuell oder über eine - in den FIGs. nicht dargestellte - Antriebseinrichtung erfolgen. Bevorzugt sind die beiden Revolver 15 eines Wickelmaterialspeichers 13 entlang der vertikal verlaufende Rotationsachse R in unterschiedlichen Höhenlagen positioniert. Jeder der beiden auf einander gegenüberliegenden Seiten des Portals 12 angeordneten Wickelmaterialspeicher 13 umfasst neben den beiden Revolvern 15 eine - in den FIGs. nicht dargestellte - einstellbare Bremsvorrichtung zur Einstellung der Spannung des Wickelmaterial während der Applikation des Wickelmaterials auf dem Erntegutballen E. Die Bremsvorrichtung ist bevorzugt motorisch über eine weitere - in den FIGs. ebenfalls nicht dargestellte - Antriebseinrichtung zwecks Steuerung der Spannung des Wickelmaterials einstellbar und als Spannrolle ausgebildet. Die als Spannrolle ausgebildete Bremsvorrichtung kann mit weiteren einem jeweiligen Revolver 15 zugeordneten Führungsrollen zusammenwirken. Das Einwickeln eines auf dem Wickeltisch 11 in der Wickelposition P unterhalb des Portals 12 befindlichen Erntegutballens E erfolgt demnach mittels der Applikation von vier Wickelmaterialbahnen, wobei immer zwei Wickelmaterialbahnen von einer Seite des Portals 12 aus über die zur Applikation vorgesehenen Wickelmaterialrollen 16 in den jeweiligen Revolvern 15 eines jeden Wickelmaterialspeichers 13 appliziert werden. Auch wenn die bevorzugte Ausgestaltung zwei Revolver 15 pro Wickelmaterialspeicher 13 vorsehen, ist es grundsätzlich möglich, auch nur einen Revolver 15 in jedem Wickelmaterialspeicher 13 vorzusehen, um einen auf dem Wickeltisch 11 in der Wickelposition P unterhalb des Portals 12 befindlichen Erntegutballens E mit Wickelmaterial einzuwickeln.

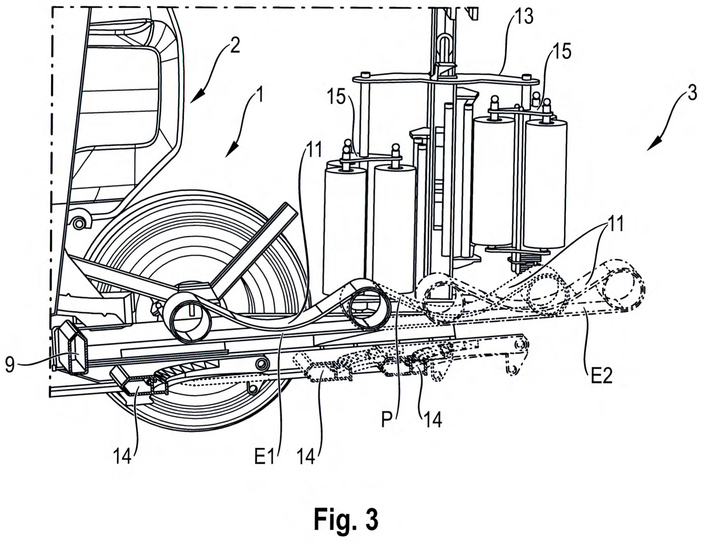

In der in den FIGs. dargestellten Ausführungsform ist der Wickeltisch 11 mit dem Tragrahmen 9, insbesondere mit den beiden Tragrahmenschenkeln 9.2, 9.3, reversibel verfahrbar gekoppelt. Der Wickeltisch 11 ist dabei zwischen zumindest einer ersten Endposition E1, der Wickelposition P und einer zweiten Endposition E2 reversibel verfahrbar, die beispielhaft in der vereinfachten schematischen Darstellung gemäß FIG. 3 dargestellt sind. Die Wickelposition P, in welcher der auf dem Wickeltisch 10 befindliche Erntegutballen E während des Betriebs der Wickeleinrichtung 3 mit Wickelmaterial eingewickelt werden kann, befindet sich dabei zwischen der ersten Endposition E1 und der zweiten Endposition E2. Die erste Endposition E1 dient vorrangig der Aufnahme des Erntegutballens E auf dem Wickeltisch 11. Bei einer Kopplung der Wickeleinrichtung 3 mit einer Rundballenpresse 2 zur Bildung einer erfindungsgemäßen Press-Wickelkombination 1 befindet sich der Wickeltisch 11 in der ersten Endposition E1 demnach in unmittelbarer Nähe des heckseitigen Endes der Rundballenpresse 2, sodass bei einem Verfahren der Auswurfklappe 6 der Rundballenpresse 2 aus der Schließstellung in die Öffnungsstellung der Erntegutballen E aus der Presskammer auf den Wickeltisch 11 gelangen kann. Die zweite Endposition E2 dient der Ablage des Erntegutballens E auf dem Untergrund. Der Wickeltisch 11 ist demnach in der zweiten Endposition E2 bei einer Kopplung der Wickeleinrichtung 3 mit einer Rundballenpresse 2 zur Bildung einer erfindungsgemäßen Press-Wickelkombination 1 entsprechend vom heckseitigen Ende der Rundballenpresse 2 beanstandet, wodurch beispielsweise auch ein Verlagern der Auswurfklappe 6 der Rundballenpresse 2 aus der Öffnungsstellung zurück in die Schließstellung möglich wird. Wie bereits angedeutet, ist der Wickeltisch 11 in der Wickelposition P zwischen den beiden Endpositionen E1, E2 angeordnet, wobei ein Abstand zwischen der Positionierung des Wickeltisches 11 in der in der ersten Endposition E1 und der Wickelposition P größer ist als ein Abstand zwischen der Positionierung des Wickeltisches 11 in der Wickelposition P und der zweiten Endposition E2, wie insbesondere in FIG. 3 dargestellt. Neben der ersten Endposition E1, der Wickelposition P und der zweiten Endposition E2 ist der Wickeltisch 11 ferner in eine - in den FIGs. nicht dargestellte -Transportposition verfahrbar. Die Transportposition zeichnet sich dadurch aus, dass sie sich zwischen der ersten Endposition E1 und der Wickelposition P befindet.

Wie bereits angedeutet, ist die Wickeleinrichtung 3 neben einer Aufnahme und eines Einwickelns des Erntegutballens E mit Wickelmaterial dazu vorgesehen und eingerichtet, den Erntegutballen E auf dem Untergrund abzulegen. Damit dies möglich wird, ist der Wickeltisch 11 um eine horizontal verlaufende Schwenkachse S schwenkbeweglich antreibbar gelagert. Durch ein Verschwenken des Wickeltisches 11 um die horizontal verlaufende Schwenkachse S wird es möglich, den Wickeltisch 11 um einen gewissen Winkelbetrag zu kippen und somit den auf dem Wickeltisch 11 befindlichen Erntegutballen E auf der landwirtschaftlichen Fläche abzulegen. Das Verschwenken des Wickeltisches 11 kann dabei in beide Dreh- bzw. Schwenkrichtungen um die horizontal verlaufende Schwenkachse S erfolgen, sodass nicht nur ein Ablegen des Erntegutballens E auf der landwirtschaftlichen Fläche möglich wird, sondern auch ein Aufnehmen des Erntegutballens E mittels des Wickeltisches 11 in der ersten Endposition E1 des Wickeltisches 11 durch ein Verschwenken desselben um die horizontal verlaufende Schwenkachse S unterstützt werden kann. Grundsätzlich kann der Wickeltisch 11 in jeder von ihm eingenommenen Position, d.h. der ersten Endposition E1, der Transportposition, der Wickelposition P sowie der zweiter Endposition E2 verschwenkt werden. Eine Schwenkbewegung des Wickeltisches 11 zur Ablage des auf dem Wickeltisch 11 befindlichen Erntegutballens E ist bevorzugt allerdings lediglich für die erste Endposition E1, die Wickelposition P und die von der ersten Endposition E1 beabstandete zweite Endposition E2 des Wickeltisches 11 vorgesehen. Mit anderen Worten, die Wickeleinrichtung 3 ist dazu vorgesehen und eingerichtet, einen auf dem Wickeltisch 11 befindlichen Erntegutballen E in der ersten Endposition E1, der Wickelposition P und der zweiten Endposition E2 durch ein Verschwenken des Wickeltisches 11 um die horizontal verlaufende Schwenkachse S auf dem Untergrund abzulegen. Die U-förmige, also einseitig offene, Ausgestaltung des Tragrahmens 9 begünstigt dabei die Ablage des Erntegutballens E in einer der genannten Positionen des Wickeltisches 11. Auch das Verschwenken des Wickeltisches 11 zwecks Aufnahme und Ablage des Erntegutballens E erfolgt mittels einer - in den FIGs. nicht dargestellten - Antriebseinrichtung.

Aufgrund der Fähigkeit der Wickeleinrichtung 3 den Wickeltisch 11 um die vertikal verlaufende Rotationsachse V drehbeweglich anzutreiben, ist es möglich, den auf dem Wickeltisch 11 befindlichen zylindrischen Erntegutballen E wahlweise auf seiner Umfangsfläche oder auf einer seiner Stirnseiten auf dem Untergrund abzulegen. Der Wickeltisch 11 ist dazu vorgesehen und eingerichtet, eine entsprechende Ausrichtung zur Ablage des Erntegutballens E auf der Umfangsfläche oder eine entsprechende Ausrichtung zur Ablage des Erntegutballens E auf einer der Stirnseiten einzunehmen, wobei die Wickeleinrichtung 3 den Wickeltisch 11 mittels eines drehbeweglichen Antriebs des Wickeltisches 11 um die vertikal verlaufende Rotationsachse V in der entsprechenden Ausrichtung positioniert. Mit anderen Worten, der Wickeltisch 11 kann von der Wickeleinrichtung 3 durch Antrieb um die vertikal verlaufende Rotationsachse V um einen gewissen Winkelbetrag gedreht werden, sodass sich der Wickeltisch 11 und demnach auch der von dem Wickeltisch 11 aufgenommenen Erntegutballen E nach Abschluss dieser Drehbewegung entweder in der Ausrichtung zur Ablage des Erntegutballens E auf der Umfangsfläche oder aber in der Ausrichtung zur Ablage des Erntegutballens E auf einer der Stirnseiten befinden. Durch ein Verschwenken des Wickeltisches 11 um die horizontal verlaufende Schwenkachse S kann der Erntegutballen E sodann in der entsprechenden Ausrichtung auf der landwirtschaftlichen Fläche abgelegt werden. Eine Ablage des Erntegutballens E auf einer seiner Stirnseiten erfolgt vorzugsweise in der zweiten Endposition E2 des Wickeltisches 11. Eine Ablage des Erntegutballens E auf seiner Umfangsfläche erfolgt hingegen vorzugsweise in der ersten Endposition E1 oder der Wickelposition P.

In der in den FIGs. dargestellten Ausgestaltung der Wickeleinrichtung 3 ist der Wickeltisch 11 mittelbar mit dem Tragrahmen 9 der Wickeleinrichtung 3, insbesondere den beiden Tragrahmenschenkeln 9.2, 9.3, gekoppelt. Die Kopplung erfolgt hierbei über einen Wagen 14, an dem der Wickeltisch 11 angeordnet ist. Der Wagen 14 ist an dem Tragrahmen 9 linear beweglich gelagert und zum reversiblen Verfahren des Wickeltisches 11 zwischen den genannten Positionen, d.h. der ersten Endposition E1, der Transportposition, der Wickelposition P und der zweiten Endposition E2, antreibbar. Bevorzugt ist der Wagen 14 beidseitig über eine Mehrzahl an Lagern an den beiden Tragrahmenschenkeln 9.2, 9.3 gelagert. Die Tragrahmenschenkel 9.2, 9.3 sind hierfür jeweils als Hohlprofile ausgeführt, in welchen die jeweiligen Lager und somit der Wagen 14 geführt bewegt werden können. Das Verfahren des Wagens 14 erfolgt mittels einer - in den FIGs. nicht dargestellten - Antriebseinrichtung. In einer bevorzugten Ausgestaltung umfasst die Antriebseinrichtung einen hydraulischen oder elektrischen Motor sowie eine Kombination aus Ritzel und Antriebskette oder aus Zahnrad und Zahnstange. Der hydraulische oder elektrische Motor ist mit dem Ritzel bzw. dem Zahnrad zwecks eines Antriebs desselben gekoppelt und an dem Wagen angeordnet. Die Antriebskette bzw. die Zahnstange ist an dem Tragrahmen 9, insbesondere an zumindest einem der beiden Tragrahmenschenkel 9.2, 9.3, angeordnet, wobei das Ritzel bzw. das Zahnrad in Eingriff mit der Antriebskette bzw. der Zahnstange steht. Durch einen Antrieb des Ritzels bzw. des Zahnrads wird dieses entlang der Antriebskette bzw. der Zahnstange und somit der Wagen 14 entlang des Tragrahmens 9, insbesondere entlang der Tragrahmenschenkel 9.2, 9.3, verfahren.

Die vorstehend genannten - in den FIGs. nicht dargestellten - Antriebseinrichtungen können wahlweise hydraulische oder elektrische Antriebselemente, beispielsweise Hydromotoren oder Elektromotoren, umfassen. Die Antriebseinrichtungen sind vorzugsweise mit einer oder mehreren Steuereinrichtungen in datenübertragender Weise verbunden, wobei die Steuereinrichtung(en) Teil der Wickeleinrichtung 3 oder bei einer Press-Wickelkombination 1 auch Teil der Rundballenpresse 2 sein können. Die Ansteuerung und/oder Einstellung der Antriebseinrichtungen kann dabei automatisch und/oder über Eingaben eines Bedieners auf einem Terminal ausgelöst und durchgeführt werden. Das Terminal kann dabei Bestandteil eines Assistenzsystem sein, welches Bestandteil der Wickeleinrichtung 3, der Rundballenpresse 2 und/oder eines externen Geräts, beispielsweise eines Smartphones, Tablets oder dergleichen, sein kann.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | Landwirtschaftliche Press-Wickelkombination | 12 | Portal |
| | | 13 | Wickelmaterialspeicher |
| 2 | Landwirtschaftliche Rundballenpresse | 14 | Wagen |
| | | 15 | Revolver |
| 3 | Wickeleinrichtung | 16 | Wickelmaterialrolle |
| 4 | Pressengehäuse | | |
| 5 | Feststehendes Gehäuseteil | | |
| 6 | Auswurfklappe | E | Erntegutballen |
| 7 | Fahrgestell | V | Vertikal verlaufende Rotationsachse |
| 8 | Mittel zum Aufnehmen und Fördern von Erntegut | | |
| | | H | Horizontal verlaufende Rotationsachse |
| 9 | Tragrahmen | | |
| 9.1 | Tragrahmenbasiselement | R | Vertikal verlaufende Rotationsachse |
| 9.2 | Tragrahmenschenkel | | |
| 9.3 | Tragrahmenschenkel | S | Horizontal verlaufende Schwenkachse |
| 10 | Bodeneingriffsmittel | | |
| 11 | Wickeltisch | P | Wickelposition |
| 11.1 | Walze | E1 | Erste Endposition |
| 11.2 | Walze | E2 | Zweite Endposition |
| 11.3 | Band | | |

## Patentansprüche

1. Wickeleinrichtung (3) zum Einwickeln von zylindrischen Erntegutballen (E) mit einem Wickelmaterial, insbesondere für eine landwirtschaftliche Press-Wickelkombination (1), wobei die Wickeleinrichtung (3) einen Tragrahmen (9) umfasst, der mit einem Wickeltisch (11) zur Aufnahme des Erntegutballens (E) und zur Ablage des Erntegutballens (E) auf einem Untergrund gekoppelt ist, wobei der Wickeltisch (11) um eine vertikal verlaufende Rotationsachse (V) drehbeweglich antreibbar und dazu vorgesehen und eingerichtet ist, den Erntegutballen (E) um eine horizontal verlaufende Rotationsachse (H) des Erntegutballens (E) drehbeweglich anzutreiben,
**dadurch gekennzeichnet, dass**
der Tragrahmen (9) ein Portal (12) umfasst, wobei der Erntegutballen (E) in einer Wickelposition (P) des Wickeltisches (11) unterhalb des Portals (12) positioniert ist, wobei die Wickeleinrichtung (3) auf einander gegenüberliegenden Seiten des Portals (12) jeweils einen an dem Portal (12) rahmenfest angeordneten Wickelmaterialspeicher (13) zur Vorhaltung des Wickelmaterials umfasst, wobei die Wickeleinrichtung (3) dazu vorgesehen und eingerichtet ist, den Erntegutballen (E) in der Wickelposition (P) des Wickeltisches (11) mittels eines drehbeweglichen Antriebs des Wickeltisches (11) um die vertikal verlaufende Rotationsachse (V) und eines drehbeweglichen Antriebs des Erntegutballens (E) um die horizontal verlaufende Rotationsachse (H) mit dem in den Wickelmaterialspeichern (13) vorgehaltenen Wickelmaterial einzuwickeln.

2. Wickeleinrichtung (3) nach Anspruch 1, **dadurch gekennzeichnet, dass** die Wickeleinrichtung (3) dazu vorgesehen und eingerichtet ist, den Erntegutballen (E) in der Wickelposition (P) des Wickeltisches (11) mittels eines gleichzeitigen drehbeweglichen Antriebs des Wickeltisches (11) um die vertikal verlaufende Rotationsachse (V) und eines drehbeweglichen Antriebs des Erntegutballens (E) um die horizontal verlaufende Rotationsachse (H) mit dem in den Wickelmaterialspeichern (13) vorgehaltenen Wickelmaterial einzuwickeln.

3. Wickeleinrichtung (3) nach Anspruch 1 oder 2, **dadurch gekennzeichnet, dass** der Wickeltisch (11) zwischen zumindest einer ersten Endposition (E1), der Wickelposition (P) und einer zweiten Endposition (E2) reversibel verfahrbar mit den Tragrahmen (9) gekoppelt ist, wobei sich die Wickelposition (P) zwischen der ersten Endposition (E1) und der zweiten Endposition (E2) befindet, wobei die erste Endposition (E1) zumindest zur Aufnahme des Erntegutballens (E) und die zweite Endposition (E2) zumindest zur Ablage des Erntegutballens (E) auf dem Untergrund vorgesehen ist.

4. Wickeleinrichtung (3) nach Anspruch 3, **dadurch gekennzeichnet, dass** der Wickeltisch (11) in eine Transportposition verfahrbar ist, wobei sich die Transportposition zwischen der ersten Endposition (E1) und Wickelposition (P) befindet.

5. Wickeleinrichtung (3) nach Anspruch 3 oder 4, **dadurch gekennzeichnet, dass** die Wickeleinrichtung (3) einen Wagen (14) umfasst, an dem der Wickeltisch (11) angeordnet ist, wobei der Wagen (11) an dem Tragrahmen (9) linear beweglich gelagert und zum reversiblen Verfahren des Wickeltisches (11) zwischen den Positionen antreibbar ist.

6. Wickeleinrichtung (3) nach einem der Ansprüche 1 bis 5, **dadurch gekennzeichnet, dass** der Wickeltisch (11) zur Aufnahme des Erntegutballens (E) und zur Ablage des Erntegutballens (E) auf dem Untergrund um eine horizontal verlaufende Schwenkachse (S) schwenkbeweglich antreibbar ist.

7. Wickeleinrichtung (3) nach Anspruch 6, **dadurch gekennzeichnet, dass** der Wickeltisch (11) dazu vorgesehen und eingerichtet ist, eine Ausrichtung zur Ablage des Erntegutballens (E) auf der Umfangsfläche des Erntegutballens (E) oder eine Ausrichtung zur Ablage des Erntegutballens (E) auf einer Stirnseite des Erntegutballens (E) einzunehmen, wobei die Wickeleinrichtung (3) dazu vorgesehen und eingerichtet ist, den Wickeltisch (11) mittels eines drehbeweglichen Antriebs des Wickeltisches (11) um die vertikal verlaufende Rotationsachse (V) in der entsprechenden Ausrichtung zu positionieren.

8. Wickeleinrichtung (3) nach Anspruch 6 oder 7 in Kombination mit einem der Ansprüche 3 bis 5, **dadurch gekennzeichnet, dass** die Wickeleinrichtung (3) dazu vorgesehen und eingerichtet ist, den Erntegutballen (E) in der ersten Endposition (E1) auf dem Untergrund abzulegen.

9. Wickeleinrichtung (3) nach einem der Ansprüche 1 bis 8, **dadurch gekennzeichnet, dass** jeder Wickelmaterialspeicher (13) zumindest einen Revolver (15) mit jeweils mehreren, vorzugsweise jeweils drei, Wickelmaterialrollen (16) umfasst, wobei die Wickeleinrichtung (3) dazu vorgesehen und eingerichtet ist, Wickelmaterial nur mittels einer der mehreren im jeweiligen Revolver (15) vorgehaltenen Wickelmaterialrollen (16) auf dem Erntegutballen (E) zu applizieren.

10. Wickeleinrichtung (3) nach Anspruch 9, **dadurch gekennzeichnet, dass** der jeweilige Revolver (15) um eine vertikal verlaufende Rotationsachse (R) drehbeweglich und entlang der vertikal verlaufenden Rotationsachse (R) höhenverstellbar, vorzugsweise jeweils antreibbar, im jeweiligen Wickelmaterialspeicher (13) gelagert ist.

11. Wickeleinrichtung (3) nach Anspruch 9 oder 10, **dadurch gekennzeichnet, dass** jeder Wickelmaterialspeicher (13) eine einstellbare, vorzugsweise motorisch einstellbare, Bremsvorrichtung, insbesondere eine Spannrolle, zur Einstellung der Spannung des Wickelmaterials während einer Applikation des Wickelmaterials auf dem Erntegutballen (E) umfasst.

12. Wickeleinrichtung (3) nach einem der Ansprüche 9 bis 11, **dadurch gekennzeichnet, dass** jeder Wickelmaterialspeicher (13) zwei Revolver (15) umfasst.

13. Wickeleinrichtung (3) nach einem der Ansprüche 1 bis 12, **dadurch gekennzeichnet, dass** der Tragrahmen (9) U-förmig, ein Tragrahmenbasiselement (9.1) und zwei sich von dem Tragrahmenbasiselement (9.1) aus erstreckende Tragrahmenschenkel (9.2, 9.3) umfassend, ausgebildet ist, wobei das Portal (12) mit den beiden Tragrahmenschenkeln (9.2, 9.3) verbunden ist.

14. Wickeleinrichtung (3) nach einem der Ansprüche 1 bis 13, **dadurch gekennzeichnet, dass** der Tragrahmen (9) mit zumindest zwei Bodeneingriffsmitteln (10) zur Abstützung der Wickeleinrichtung (3) gegenüber dem Untergrund gekoppelt ist, wobei, vorzugsweise, jeder Tragrahmenschenkel (9.2, 9.3) mit zumindest einem Bodeneingriffsmittel (10) gekoppelt ist.

15. Landwirtschaftliche Press-Wickelkombination (1) umfassend eine landwirtschaftliche Rundballenpresse (2) und eine Wickeleinrichtung (3) zum Einwickeln von zylindrischen Erntegutballen (E) mit einem Wickelmaterial **dadurch gekennzeichnet, dass** die Wickeleinrichtung (3) nach einem der Ansprüche 1 bis 14 ausgebildet ist.
